Europäisches Patentamt

European Patent Office

Office européen des brevets

(11) Publication number: **0 136 151**
**A1**

## (12) EUROPEAN PATENT APPLICATION

(21) Application number: **84306386.8**

(22) Date of filing: **19.09.84**

(51) Int. Cl.⁴: **C 04 B 35/52, C 04 B 35/54**

(30) Priority: **20.09.83 US 534050**

(43) Date of publication of application: **03.04.85**
**Bulletin 85/14**

(84) Designated Contracting States: **CH DE FR GB IT LI SE**

(71) Applicant: **UNION CARBIDE CORPORATION, Old Ridgebury Road, Danbury Connecticut 06817 (US)**

(72) Inventor: **Montgomery, Lionel Clayton, 571 Marygate Drive, Bay Village Ohio 44140 (US)**
Inventor: **Criscione, John Michael, 8796 Elsmere Drive, Parma Ohio 44130 (US)**

(74) Representative: **Gore, Peter Manson et al, W.P. THOMPSON & CO. Coopers Building Church Street, Liverpool L1 3AB (GB)**

(54) Graphitic articles and their production.

(57) The present invention provides a process for making shaped graphite articles which comprises blending finely divided carbonaceous particles with from about 5 to 31 percent, by weight of the mixture, of boron-containing compound selected from silicon borides, titanium borides, vanadium borides, molybdenum borides, chromium borides and mixtures thereof, and thereafter pressure shaping and heating the mixture between about 1900°C and 2800°C whereby boron atoms from said boride diffuse substantially into the graphite structure of said shaped articles thereby promoting graphitization, densification, and bonding therein.

-1-

## DESCRIPTION

## GRAPHITIC ARTICLES AND THEIR PRODUCTION.

This invention relates to pitch-free graphite articles and to a process for making the same without using a conventional binder such as pitch as is employed in the prior art.

Most graphite articles require a pitch binder phase to cement carbon particles together since carbon does not melt or form liquid phases at moderate temperatures and pressures. The process is complicated, costly, and time consuming.

When a pitch binder is used, gases from volatile matter are produced and escape from the carbon solid by the decomposition of the pitch binder phase during baking to form carbon, leaving some voids or pores in it. Therefore, in order to make a high-density, strong, carbon, techniques have been used such as repeated impregnation with pitch and heat-treatment in an autoclave, use of high yield pitches or filling up pores with a decomposition of pyrolytic carbon. Even by these treatments, it is difficult to obtain dense graphite solids with low permeability.

0136151

-2-

The demand for development of new advanced carbon materials has been increasing in various scientific fields to support recent advanced technology, especially development of strong and dense graphite materials which can be used in various new fields such as aerospace, biomaterials, nuclear applications, mechanical seals, crucibles, and high temperature machine parts.

Graphite products are currently produced by the complicated and lengthy process described below:

| | | |
|---|---|---|
| 1. | HOT MIXING | Carbonaceous material, usually calcined coke, is hot mixed with pitch to coat the coke particles with pitch. |
| 2. | FORMING: | The hot mixes are either extruded or moulded into shapes. |
| 3. | BAKING | Formed shapes are baked very slowly, 5°C/hr, to about 850°C to decompose the pitch and convert it to coke. |
| 4. | IMPREGATION REBAKE: | Baked shapes are impregnated with pitch type materials to increase density followed by rebaking; frequently more than one cycle is needed. |

-3-

5. GRAPHITIZATION Baked shapes are reheated to 2800°C to thermally rearrange the carbonaceous material into a crystalline form having an ordered pattern of stacked parallel planes characteristic of graphite. This is accompanied by a desirable change in the physical properties.

There are numerous Patent Specifications relating to the making of shaped carbon and graphite articles. The following background disclosure is restricted to those Specifications which are believed to be most relevant.

Considered to be the single most relevant is U.S. Patent Specification No. 4,046,863 which discloses a process for producing graphite articles with densities of at least 2.0 g/cc by mixing amorphous carbon or graphite with from three to thirty weight percent boric acid or boron oxide in the absence of pitch binder and hot pressing the mixture at a temperature of at least 2000°C and at pressures of at least 100 kg/cm$^2$ (1420 psi). U.S. Patent Specification No. 4,046,863 however, does not mention or imply that metal borides can be used to advantage as is taught by the present invention. Gasses from volatile matter are produced by the decomposition of the boric oxide or boric acid leaving some voids and pores in the product.

U.S.S.R. Patent Specification 337,372 discloses hot pressing a mixture of coke, pitch and boron at temperatures of at least 2000°C while under a pressure of 200-300 kg/cm$^2$ (2840-4260 psi).

-4-

Mixes that incorporate carbonaceous materials, and boron-containing compounds are also disclosed in U.S. Patent Specifications Nos. 457,763; 3,174,872; 3,284,373 and 3,672,936.

Impregnating a carbonaceous body with an inorganic ammonium boron compound is disclosed in U.S. Patent Specification No. 3,370,967.

Reducing boric anhydride with up to 18% carbon at temperatures of about 2000°C is disclosed in U.S. Patent Specification No. 1,019,390.

U.S. Patent Specification No. 4,188,279 and U.S.S.R. Patent Specification No. 531,794 disclose compositions consisting of carbonaceous material, pitch binder, and boron compounds. The U.S.S.R. Patent Specification also discloses forming the mixture into a shape by hot pressing. A process for producing a graphite boron material, consisting of from 10 to 60 percent by weight boron and from 90 to 40 percent by weight graphite, by hot pressing the mixture at a temperature between 200°C and 1200°C and at pressures between 6.89 and 48.3 MPa (1000 psi and 7000 psi) is disclosed in U.S.Patent Specification No.2,987,488. None of the materials disclosed had densities above 1.9 gm/cc. U.S.Patent Specification No.2,997,744 discloses a method of hot pressing and graphitizing carbonaceous mixtures of pitch, carbon black, and coke or graphite by heating the mixture in a graphite mould to about 2500°C while applying a pressure of at least 8.27 MPa (1200 psi). Carbon electrodes containing small quantities of boric acid in the electrode composition are disclosed in U.S. Patent Specification No. 2,949,430.

An oxidation resistant lightweight refractory that consists of carbonaceous fibrous material and an oxidation resistant, boron containing, material that

-5-

is formed by hot pressing the mixture at temperatures between 1850° and 2250°C and at pressures between 14.48 and 43.44 MPa (2100 psi and 6300 psi) is disclosed in U.S. Patent Specification No.3,470,003.

Japanese Patent Specification No. Sho 57 [1982-135775] discloses a method for making a moulded carbon product by baking a green coke containing 3 to 15 percent of boron or titanium compounds especially $B_4C$.

None of the above Patent Specifications, however, discloses or suggests in any manner the present invention.

According to the present invention there is provided a process for making shaped graphite articles which comprises blending finely divided carbonaceous particles with from about 5 to about 31 percent, by weight of the mixture, of boron-containing compound selected from silicon borides, titanium borides, vanadium borides, molybdenum borides, chromium borides and mixtures thereof, and thereafter pressure shaping and heating the mixture between about 1900°C and 2800°C whereby boron atoms from said boride diffuse substantially into the graphite structure of said shaped articles thereby promoting graphitization, densification, and bonding therein.

An embodiment of the present invention provides a process for making graphite articles comprising blending finely divided green or calcined petroleum or pitch coke or graphite or carbon black or surprisingly thermatomic black, which is generally considered to be a non-graphitizable material, with about 5 to 30 percent by weight of a boron containing compound of the group consisting of silicon borides, titanium diborides, vanadium borides, molybdenum borides, chromium borides and mixtures thereof; pressing the resulting mixture in a graphite mould under a pressure of about 5.52 to 7.58 MPa (800 to 1100 psi), preferably 1000 psi to form a billet; heating the mould and billet to between 1900°C and 2800°C under a pressure of about 6.89 to 27.58 MPa (1000 psi to 4000 psi) for about 3 hours using high frequency induction heating or resistance heating at the rate of about 480°C to 550°C, preferably 500°C per hour rise and cooling the hot pressed billet in the furnace to approximately room temperature.

In the present process, boron atoms from the boride additive diffuse substitutionally into the graphite structure at temperatures around 2000°C promoting graphitization, densification, and bonding under the applied pressure.

Alternatively, the carbonaceous mixture containing the boron compound additive(s) may be cold pressed followed by sintering without any applied pressure. This cold pressing alternative method utilizes higher moulding pressures of the order of 137.9 to 206.8 MPa (10 to 15 tons per square inch) and produces a product that is at least as good as that produced by the alternative hot pressing method. The sintering is preferably performed in an inert atmosphere at a heating rate of about 300°C/hour to a final temperature of 2200°C, holding said sintered article at the temperature for about one hour followed by cooling at a natural rate.

The improved process offers the following benefits over the conventional method to produce graphite shapes.

Shorter Fabriction Time - Hot pressed shapes can be produced in a few days compared to the several months for the complicated conventional process. Conventional fabrication has two processes, carbonization and graphitization, and it takes a long time to get a final product. The improved process is simple and products can be obtained in one process in a short time.

Increased Rate of Graphitization - The presence of boron increases the graphitization rate of carbonaceous materials. Graphite products prepared by the improved process at about 2300°C have a degree of graphitization comparable to graphite produced at 2800 to 3000°C by the conventional process.

Lower Rate of Oxidation - The high density produced and the presence of boron in the graphite structure of shapes prepared by the improved process results in at least a three fold improvement in the oxidation rate at temperatures up to 800°C when compared to conventional graphite materials.

The mechanical strength of these composites is equivalent to and often exceeds the strength of conventional graphites and the oxidation resistance in dry air is much superior at temperatures as high as 800°C. Overall processing time is reduced from months to days, thus improving the economics of the process.

The invention will now be illustrated by, but is in no manner limited to, the following Examples.

Example 1:

An anisotropic coke was crushed and ball milled to produce a powdered coke of a size such that approximately 90 percent by weight would pass through a 200 Tyler mesh sieve. This sized anisotropic coke shall be identified as Coke A. Chromium diboride ($CrB_2$) was milled using a ball mill to produce a powder of an average particle size that was 2 um as measured on a Fisher Sub-Sieve Sizer (FSSS). A blend of the two powders consisting of 88 parts by weight Coke A and 12 parts by weight $CrB_2$ was prepared by blending in a Patterson-Kelly twin-shell blender fitted with an intensifier bar. The blended powders were placed in a graphite die having 3.81 cm (1-1/2") diameter cavity. The die was heated in a graphite tube furnace to a temperature of 2100°C at a rate of 500°C/hr and held at 2100°C for two hours. During this heating, pressure was applied ranging from 6.89 MPa gauge (1000 psig) at room temperature to 10.34 MPa gauge (1500 psig) at 2100°C. An atmosphere of argon was used, principally to protect the graphite furnace and die from oxidation. The hot-pressed billet thus produced was cooled to essentially room temperature in the absence of pressure in the argon atmosphere and before it was removed from the die. The properties of samples cut from this billet are presented in Table I.

Example 2

An isotropic coke was crushed and milled using a swing-hammer mill to produce a powdered coke of a size such that approximately 55 percent by weight would pass through a 200 Tyler mesh sieve. This sized isotropic coke shall be identified as Coke B. A blend consisting of 66 parts by weight Coke A, 22 parts by weight Coke B, and 12 parts by weight of the milled $CrB_2$ from Example 1 was prepared by blending in a Patterson-Kelly twin-shell blender fitted with an intensifier bar. The blended powders were hot pressed as described in Example 1. The physical properties of samples cut from this billet are presented in Table I.

Example 3:

A coke flour was prepared by ball milling the anisotropic coke used to prepare Coke A. The average particle size of this coke flour, which shall be identified as Coke C, was 15 um, as measured using a FSSS. A blend of 90 parts by weight Coke C and 10 parts by weight of the milled $CrB_2$ from Example 1 was prepared and hot pressed as described in Example 1 except that the pressure used was 6.89 MPa (1000 psi) and the final temperature used was 2250°C. The properties of samples cut from the billet thus produced are presented in Table I.

0136151

-9-

Example 4:

A coke flour was prepared by ball milling the isotropic coke used to prepare Coke B. The average particle size of this coke flour, which shall be identified as Coke D, was 1 μm as measured using a FSSS. A blend of 77.5 parts by weight Coke D and 22.5 parts by weight of the milled $CrB_2$ from Example 1 was prepared and hot pressed as described in Example 3. The properties of samples cut from the billet thus produced are presented in Table I.

Example 5:

A blend consisting of 94 parts by weight Coke A and 6 parts by weight of the ball milled $CrB_2$ of Example 1 was prepared and hot pressed as described in Example 1 except that the pressure used was 27.58 MPa (4000 psi) and the final temperature was 2300°C. The properties of the billet thus produced are presented in Table I.

The examples of hot pressed material are presented in tabulation form in the table below. This table illustrates the physical properties of the moulded products obtained by the hot pressing process of the invention. The examples of the manufacture of the cold pressed materials are presented in conventional form together with Tables II and III showing the properties of the cold pressed materials.

## Table I

### Properties of Pitch-Free Graphite Prepared by Hot-Pressing Method from Coke-Chromium Diboride Blends

| EXAMPLE | 1 | 2 | 3 | 4 | 5 |
|---|---|---|---|---|---|
| Property | Coke A+ 12%CrB$_2$ | Coke A+ 22%Coke B+ 12%CrB$_2$ | Coke C+ 10% CrB$_2$ | Coke D+ 22.5%CrB$_2$ | Coke A+ 6%CrB$_2$ |
| Pressure Sintering MPa (psi) | 10.34 (1500) | 10.34 (1500) | 6.89 (1000) | 6.89 (1000) | 27.58 (4000) |
| Pressure Sintering Temp. °C | 2100 | 2100 | 2250 | 2250 | 2300 |
| Billet Diameter,cm (in) | 3.81 (1.5) | 16.51 (6.5) | 3.81 (1.5) | 3.81 (1.5) | 2.81 (1.5) |
| Density,g/cc | 1.77 | 1.75 | 1.85 | 2.11 | 2.07 |
| % of Theoretical | -- | 73 | -- | 83 | 90 |
| Flexural Strength,MPa (psi) | | | | | |
| 25°C AG | 23.44(3400) | 22.75(3330) | 28.34(4110) | 55.85(8100) | 25.51(370() |
| WG | --- | 40.69(5901) | --- | --- | --- |
| 1500°C AG | --- | 31.88(4624) | --- | --- | --- |
| WG | --- | 51.35(7448) | --- | --- | --- |
| Sonic Modulus MPa,(psi x 10$^6$) | | | | | |
| 25°C AG | 6343 (0.92) | 7033(1.02) | 4620(0.67) | 25510(3.7 | 6757(0.98) |
| WG | --- | 15580(2.26) | --- | --- | --- |
| Electrical Resistivity, microhm-m 25°C AG | | 9.09 | 8.8 | 12.91 | 5.9 | 13.8 |
| WG | | ---- | 5.8 | ----- | --- | ---- |
| Ceoff. of Thermal Expansion. cm/cm/°C x 10$^{-6}$ AG | | ---- | 5.5 | ----- | --- | ---- |
| WG | | ---- | 3.5 | ----- | --- | ---- |
| Permeability, Darcy's | | ---- | 0.000019 | ----- | --- | ---- |
| Interlayer Spacing, Å | | 3.360 | 3.357 | ----- | --- | 3.367 |

NOTES: All percentages are expressed on a weight basis.
Coke A is anisotropic petroleum coke, 90% -200 Tyler mesh.
Coke B is isotropic petroleum coke, 55% -200 Tyler mesh.
Coke C is Coke A ball milled to 15 μm by FSSS.

-11-

Table I shows that the shaped articles of the subject invention have a high density, high flexural strength and low specific electrical resistivity.

The following additional examples of pitch-free processing of carbonaceous mixtures with boron compound additives illustrate the cold-pressing method followed by sintering without applied pressure. It should be noted that Example 6 also shows that isostatic pressing is a suitable alternative to pressing in a steel die.

Example 6:

An aritificial graphite was ball-milled for about 50 hours to produce a flour whose average particle size, as measured on a fisher Sub-Sieve Sizer (FSSS), was 1.7 microns. Chromium diboride was similarly ball-milled for 50 hours, producing a flour of average particle size of 1.5 microns. A blend was prepared using 69.2 parts by weight of graphite and 30.8 parts by weight of $CrB_2$ by using the blender of Example 1. The blend was then formed at room temperature by two methods:

    a)   moulded in a steel die 3.18 cm (1.25) in diameter at a pressure of 206.8 MPa (15 tons per square inch) to form a sample about 2.54 cm (1") long.

    b)   isostatically moulded by a standard vacuum-pressure technique to a pressure of 137.9 MPa (10 tons per square inch) to form a sample 3.18 cm (1.25") in diameter by 10.2 cm (4") long.

Both formed bodies were sintered using a heating rate of 300°C/hour to a final temperature of 2200°C, held at that temperature for one hour, and allowed to cook, all steps being conducted in an argon atmosphere.

The properties of the samples are presented in Table II.

-12-

Physical Properties of Pitch-Free Graphite by Cold
Pressing and Sintering Method from Graphite Flour-
Chromium Diboride Blends.

|  | Sample 6(a) | Sample 6(b) |
|---|---|---|
| Density before sintering (% of theoretical) | 78 | 70.1 |
| Density after 2200°C sintering (% of theoretical) | 75 | 72 |
| Linear shrinkage on sintering (%) | -1.1* | -1.0* |
| Flexural Strength (MPa, with-grain) (psi, with-grain) | 95.15 13,800 | 64.81 9,400 |
| Sonic Modulus (MPa, with grain) (psi x $10^6$, with grain) | 35,780 5.19 | 28,270 4.1 |

Example 7:

A raw (i.e., green or uncalcined) petroleum coke was ball-milled to produce a coke flour with an average particle size of 1.5 microns as measured on a FSSS. This coke flour was blended with the 1.5 micron $CrB_2$ flour from Example 6 in a ratio of 69.2 parts by weight coke and 30.8 parts by weight $CrB_2$. The blend was moulded in a steel die at a pressure of 206.8 MPa (15 tons per square inch) and sintered using the method described in Example 6. A similar product was produced from the same 1.5 micron petroleum coke flour without any additive. The physical properties for these two materials are shown in Table III.

-13-

## Table III.

### Physical Properties of Pitch-Free Compacts Prepared by Cold Pressing and Sintering Method from Plain Coke and a Coke-Chromium Diboride Blend.

|  | Coke | Coke + 30.8% $CrB_2$ |
|---|---|---|
| Density before sintering (% of theoretical) | 57 | 56 |
| Density after 2200°C sintering (% of theoretical) | 73 | 77 |
| Linear shrinkage on sintering | 13 | 11 |
| Flexural Strength (MPa, with-grain) | 13.79 | 54.27 |
| (psi, with-grain) | 2,000 (Est.) | 7,871 |

Two additional examples are presented to show that the hot-pressing method can be used to make highly graphitic articles from a thermatomic black, Thermax, which is normally considered to be a non-graphitizible carbon.

Example 8:

A blend consisting of 30.8 parts by weight $CrB_2$ powder of Example 1 and 69.2 parts by weight of Thermax thermatomic black having an average particle size of approximately 0.5 μm (FSSS) was prepared in a Patterson-Kelly twin-shell blender fitted with an intensifier bar. The blend was hot pressed according to Example 1 except that the final temperature was 2200°C and the billet had a diameter of 5.08 cm (2"). The properties of samples cut from this billet are presented in Table IV. Of specific importance is the low resistivity and the interlayer spacing which indicate complete graphitization of the thermatomic black, which is normally considered to be "ungraphitizible".

-14-

Example 9:

A coke flour was prepared by ball milling the isotropic coke used to prepare Coke B. The average particle size of this coke flour, which shall be identified as Coke E, was 1.5 $\mu$m as measured using a FSSS. A blend was prepared of 34.6 parts by weight of Coke E, 34.6 parts by weight of the Thermax that was described in Example 8, and 30.8 parts by weight of the $CrB_2$ that is described in Example 8. The blending and hot pressing of this blend was as described in Example 8. The properties of samples cut from the billet thus produced are shown in Table IV.

Table IV


Properties of Pitch-Free Prepared by Hot-Pressing Method

From Blends Containing Thermax and Chromium Diboride

| EXAMPLE | 8 | 9 |
|---|---|---|
| Property | Thermax + 30.8% CrB$_2$ | Thermax + 34.6% Coke E + 30.8% CrB$_2$ |
| Pressure Sintering, MPa | 10.34 (1500) | 10.34 (1500) |
| Pressure Sintering Temperature, °C | 2200 | 2200 |
| Billet Diameter, CM (in) | 5.08 (2.0) | 5.08 (2.0) |
| Density % of Theoretical | 75 | 74 |
| Flexural Strength, MPa,(psi) 25°C AG | 49.64 (7200) | 57.78 (8380) |
| WG | 51.02 (7400) | 61.98 (8990) |
| Sonic Modulus MPa,(psi x 10$^6$) 25°C AG | 22.750 (3.3) | 19.990 (2.9) |
| WG | 27.580 (4.0) | 24.820 (3.6) |
| Electrical Resistivity, microhm-m 25°C AG | 4.8 | 5.4 |
| WG | 4.4 | 5.0 |
| Permeability, Darcy's | 0.052 | 0.0042 |
| Interlayer Spacing, Å | 3.326 | ----- |

-16-

In the practice of the invention there can be used various types of carbon such as calcined pitch coke, artificial graphite powder, animal carbon or coke graphitized by baking at above 1500°C. The material used should preferably be pulverized to a particle size smaller than about 15 microns. The boron containing additive should be homogeneously mixed and dispersed in the carbonaceous powder. Preferably both are comminuted to the same size in the same milling equipment.

The shaped articles of the subject process can be used, inter alia, for electrode purposes as electrodes and the like.

.................................................................

17.

## Claims

1. A process for making shaped graphite articles which comprises blending finely divided carbonaceous particles with from about 5 to about 31 percent, by weight of the mixture, of boron-containing compound selected from silicon borides, titanium borides, vanadium borides, molybdenum borides, chromium borides and mixtures thereof, and thereafter pressure shaping and heating the mixture between about 1900$^{\circ}$C and 2800$^{\circ}$C whereby boron atoms from said boride diffuse substantially into the graphite structure of said shaped articles thereby promoting graphitization, densification, and bonding therein.

2. A process as claimed in claim 1 in which the mixture is prepressed under pressure of about 5.52 to 7.58 MPa (800 to 1100 psi) to form a billet.

3. A process as claimed in claim 2 in which the prepressing is effected under a pressure of about 6.89 MPa (1000psi).

4. A process as claimed in any of claims 1 to 3 in which heating is effected by high frequency induction heating.

5. A process as claimed in any of claims 1 to 4 in which heating is effected by resistance heating.

6. A process as claimed in any of claims 1 to 5 in which the formed mixture is heated between 1900$^{\circ}$C and 2800$^{\circ}$C under pressure of about 6.89MPa (1000psi) to about 27.58MPa (4000 psi) for about 1 to 3 hours at a rate of about 450 to 550$^{\circ}$C rise per hour.

7. A process as claimed in claim 6 in which the heating rate is about 480$^{\circ}$C to 550$^{\circ}$C per hour rise.

8. A process as claimed in claim 6 in which the heating rate is about 450$^{\circ}$C to 500$^{\circ}$C per hour rise.

9. A process as claimed in claim 6 in which the heating rate is about 500$^{\circ}$C per hour rise.

18.

10. A process as claimed in any of claims 1 to 5 in which pressing is performed at room temperature at pressure about 137.9 to 206.8 MPa (10 to 15 tons per square inch) followed by sintering the formed article.

11. A process as claimed in claim 10 in which the sintering is performed in an inert atmosphere at a heating rate of about 300°C/hour to a final temperature of 2200°C, holding said sintered article at the temperature for about one hour followed by cooling at a natural rate.

12. A process as claimed in any of claims 1 to 11 in which the heating is performed in an argon atmosphere.

13. A process as claimed in any of claims 1 to 12 in which the boron-containing is compound is chromium diboride $CrB_2$).

14. A process for making shaped graphite articles substantially as hereinbefore described with particular reference to any of the foregoing Examples.

15. A graphite article whenever made by a process as herein described and claimed.

0136151

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CERAMIC ABSTRACTS vol. 61, no. 3-4, March-April 1 982, Columbus, Ohio, USA T. HAGIO et al. "Effect of additon of borides on hot-pressing of coke", page 110, column 1, abstract no. 61-02319A & YOGYO KYOKAI SHI, vol. 87, no. 8, 1979, pages 41 6-422 | 1,13 | C 04 B 35/52<br>C 04 B 35/54 |
| | --- | | |
| A | IDEM | 6 | |
| | --- | | |
| D,A | US-A-4 046 863 (K. KOBAYASKI et al.)<br>* Claim 1 * | 1,6 | |
| | ----- | | **TECHNICAL FIELDS SEARCHED (Int. Cl.4)** |
| | | | C 04 B 35/52 |

The present search report has been drawn up for all claims

| Place of search<br>BERLIN | Date of completion of the search<br>12-12-1984 | Examiner<br>STROUD J.G. |
|---|---|---|

**CATEGORY OF CITED DOCUMENTS**

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document